# EUROPEAN PATENT SPECIFICATION

(11) **EP 1 240 544 B1**
(45) Date of publication and mention of the grant of the patent: **13.08.2003**
(21) Application number: 00985183.3
(22) Date of filing: 14.12.2000
(51) Int. Cl.: G02F 1/03, G02F 1/035, G02F 1/225, G02F 1/313

(54) **ACTIVE DEVICE ASSEMBLY**
AKTIVE BAUGRUPPE
DISPOSITIF ACTIF

(30) Priority: 24.12.1999 EP 99125896; 30.12.1999 US 173552 P
(43) Date of publication of application: 18.09.2002
(73) Proprietor: Corning O.T.I. S.p.A., 20126 Milano (IT)
(72) Inventor: SHAW, Mark, Andrew, I-20154 Milano (IT); MARAZZI, Marco, I-27100 Pavia (IT); SCIANCALEPORE, Davide, I-10014 Caluso (IT)
(74) Representative: Poole, Michael John
(86) International application number: EP0012875
(87) International publication number: WO01048542

(56) References cited:
- GB-A- 2 329 486
- US-A- 4 750 800
- US-A- 5 123 065
- US-A- 5 150 376
- PATENT ABSTRACTS OF JAPAN vol. 016, no. 565 (P-1457), 7 December 1992 (1992-12-07) -& JP 04 216504 A (FUJITSU LTD), 6 August 1992 (1992-08-06)

## Description

Present invention is referred to the packaging of electro-optical devices, such as switches, phase shifter, modulators, attenuators and the like.

More generally, present invention is referred to active devices.

To the purpose of the present invention active devices are devices having the characteristic of using electrical signals to change properties (as intensity, phase, direction) of an optical signal travelling in a waveguide formed on the devices. Said electrical signals used in active devices are often in the range of microwaves, from several hundreds of MHz to some GHz, which is the typical telecommunications range.

Said active devices are telecommunications devices and they comprise a chip made of a crystalline material, such as lithium niobate, lithium tantalate or the like, with optical waveguides formed in a surface of the crystalline material by, for example, titanium diffusion. Electrodes are then preferably formed on the same surface of the chip, for providing an electrical signal, in order to perform the switching or modulation function.

In the packaging of such devices use is made of high cost hermetic or semi-hermetic metal packages, with the electrical connections through the package walls being made by ceramic feedthroughs or glass to metal seals, around a metal pin (for a switch) or a coaxial connector (for a modulator), in order to bring the electrical signal to the electrodes.

The electrical connections from the contact pin or connector on the package to the electrodes on the chip are made either by directly soldering to the pin, wirebonding (ribbon for high frequency operation) and/or by ceramic strip lines.

Optical fibres pass through a feedthrough in the package wall and are generally fixed to the chip by means of fiber-blocks and UV curable adhesive, in order to add or drop the optical signal to or from the optical waveguides in the chip. For a hermetic package a seal between the package wall and the optical fibre has to be made.

The packaging of the device further comprises the fixing of the chip either directly onto the package base or onto a submount fixed to the package base, with a face-up technique, i.e. on the surface of the chip free from optical and electrical waveguides.

Generally, the chip mounting area in the package or on the submount has sufficient compliance, or the material composing the submount has a coefficient of thermal expansion similar to the lithium niobate. The thermal mismatch is then small, in order to remove the risk of chip breaking particularly during non-operative steps of the life of the device, as during transport.

In order to ensure a good behaviour of the device in said non-operative steps, the same is submitted to stringent tests, the so-called thermal cyclings: this tests consist in submitting the device to a temperature changing, starting from a minimum comprised between -40 °C and -20 °C, and reaching a maximum comprised between +70 °C and +85 °C, which are typical ranges for telecommunications devices.

Examples of this packaging technique can be found in O'Donnell, "Packaging and Reliabilty of Active Integrated Optical Components", European Conference on Integrated Optics, 1995 paper Th C4 , pp. 585-590, and in Nagata et al., "Mechanical Reliability of LiNbO₃ Optical Modulators Hermetically Sealed in Stainless Steel Packages", Optical Fiber Technology, 1996, Vol. 2, pp. 216-224.

US patent 5,123,065 to Tektronix, which forms the basis of independent claims 1 and 11, describes an alternative approach for fixing a lithium niobate chip in a package for an active device and, at the same time, for bringing an electrical signal toward the electrodes. A module has a ceramic substrate with a planar surface on which an electro-optical transducer in a face-down (or flip-chip) orientation is secured, that is with the surface carrying waveguides and electrodes facing such planar surface of the substrate. Said ceramic substrate is Al₂O₃. The substrate has metallized areas formed thereon for providing an electrical path for connecting an external source of RF or microwave power to the electrode structure of the device. Solder columns extend from metallized areas on the substrate to contact areas on the electro-optical transducer module and secure the transducer to the substrate. The chip is positioned away from the substrate by spacers, formed by non-conductive material, contained in solder columns.

Then, other solder columns connect the metallized conductors to the electrode structure on the electro-optical transducer. Optical fibres are also secured to the chip by means of solder preforms.

US Patent 4,750,800 to Fournier describes a particular approach to solving the problem of mismatches in thermal expansion between a chip and the substrate to which it is physically bonded, namely to achieve the closest possible match in both (1) the orientation of the crystallographic axes of the chip and the substrate, and (2) the coefficients of thermal expansion of the chip and the substrate. This leads to the inevitable conclusion, as stated in column 3, lines 62-63 of that document, that both the chip and the substrate should be made of the identical material, e.g. lithium niobate crystal with the same crystal cut.

The applicant has made experiments with active-device chips directly contacting the substrates and has experimentally found that the chips can suffer from cracks. In these experiments the thermal expansion coefficient of the substrate material was lower then the coefficient of thermal expansion of the chips. The applicant has determined that the cracks in the chip may be linked with the differential expansion of the chip and substrate under low temperature conditions, in combination with a poor resistance to tension of the chip material.

In the packaging technique of passive devices, electrical connections being not involved, a low cost approach has been used where the passive device is encapsulated using a silicon based resin and then fitted into a plastic case. As there are no electrical connections there is no risk that extemal environmental factors could degrade the electrical performance. US patent 5,696,860 to Sumitomo, for example, describes an optical device module including an optical device, first and second fiber connectors holding optical fibers directly coupled to respectively first and second ends of the optical device, and an enclosure body integrally molded with a first resin to enclose the whole module body. A second resin in the form of a gel such as a silicon resin, urethane resin, is interposed between the enclosure body and the module body.

The applicant has addressed the problem of improving the electrical and the mechanical connection between the chip and the substrate in order to facilitate the operative condition of the chip.

The applicant has found that if the substrate and the chip are in a direct contact the electrical connection is improved. In this condition, if the coefficient of thermal expansion of the substrate is greater than or equal to the coefficient of thermal expansion of the chip, the contact between the chip and the substrate does not damage or crack the chip.

According to a first aspect thereof, this invention relates to an active device assembly comprising:
a substrate having at least a planar surface on which a plurality of electrical contact pads are formed,
a chip having a surface on which at least one optical waveguide and a plurality of electrodes are formed,
said chip surface being in a facing relationship and in a direct mechanical connection with the planar surface of the substrate,
said electrical contact pads being in electrical contact to said electrodes,
wherein said chip is made of a thermally anisotropic crystalline material having first and second different magnitude coefficients of thermal expansion, the larger of the first and second coefficients of thermal expansion being in a direction along the longest dimension of said chip surface and wherein said substrate has a third coefficient of thermal expansion, characterised in that said third coefficient of thermal expansion is both dissimilar from and greater than said larger of the first and second coefficients.

In particular, said chip can be a lithium niobate chip.

Preferably said contact pads and said electrodes provide mechanical connections between said chip and said substrate,
Preferably, said contact pads are in contact to said electrodes by a conductive glue.

In particular, said conductive glue can be an epoxy glue.

Preferably, said chip is an electro-optical modulator.

Alternatively, said chip is a switch.

A further aspect of the present invention relates to a method of packaging and assembling an optical planar active device, comprising a chip of a thermally anisotropic crystalline material having a surface on which there are formed at least one optical waveguide and a plurality of electrodes and having first and second different magnitude coefficients of thermal expansion, the larger of the first and second coefficients of thermal expansion being in a direction along the longest dimension of said chip surface.

The method comprises the following steps:
providing a substrate having at least a planar surface on which a plurality of contact pads are formed,
placing said chip surface in a facing relationship with the planar surface of the substrate,
connecting said contact pads to said electrodes to provide electrical connection and direct mechanical connection.

The step of providing a substrate comprises selecting a substrate having a third coefficient of thermal expansion that is both dissimilar from and greater than said larger of the first and second coefficients of thermal expansion.
Fig.1 shows a packaged active device like an electro-optical modulator according to the present invention;
Fig.2 shows one example of waveguide and electrode patterns on a lithium niobate chip;
Fig.3a shows one example for the top surface of a substrate to be used in the present invention, with an electrical pattern matching the electrode pattern of fig.2;
Fig.3b shows the bottom surface of the substrate of fig.3a;
Fig.4 shows a packaged electro-optical switch according to the present invention, in a packaging step.

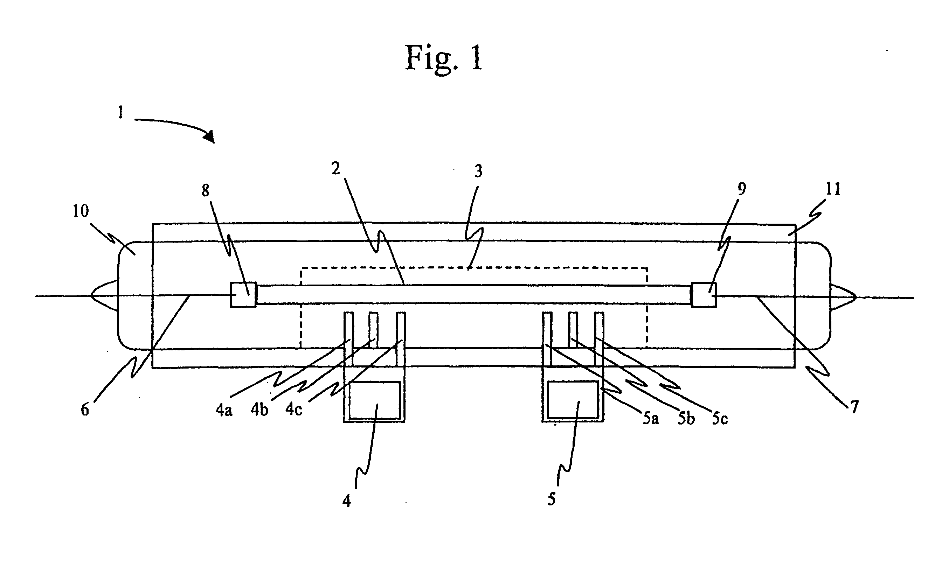

Referring to fig.1, a packaged electro-optical device 1 is shown; in particular said device is a modulator comprising an x-cut lithium niobate chip 2. The chip 2 is cut with a length of 55 mm, a width of 2 mm and a thickness of 1 mm. Typical dimensions for a modulator's chip are 45-60 mm for the length, 1-5 mm for the width, 0.5-1.5 mm for the thickness.

Present invention is equally applicable to other active devices as defined before.

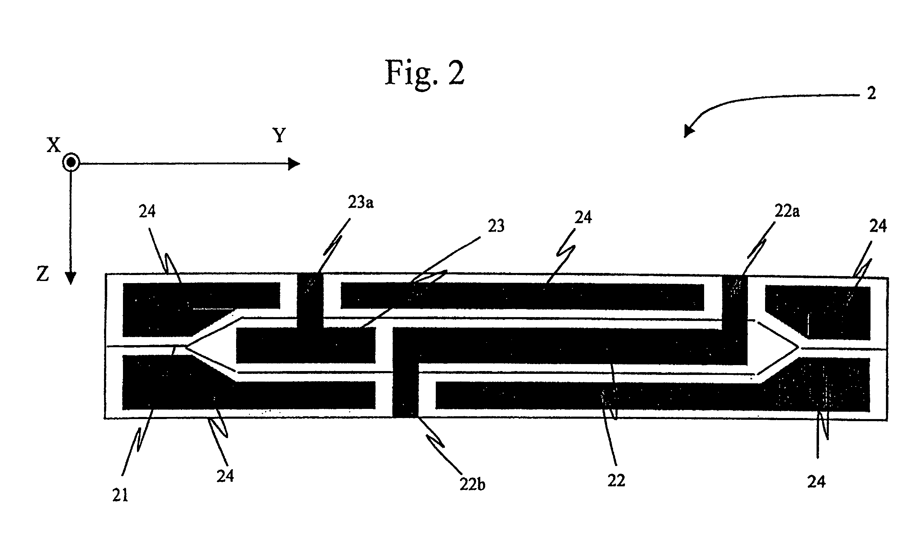

The lithium niobate is an anisotropic material and presents different coefficients of thermal expansion according to different cristallographic axes. The direction of greatest length along the chip surface (the Y direction as seen in figure 2) will be referred in the present application as the "length direction". For an x-cut chip, the coefficient of thermal expansion is equal to 15.4*10⁻⁶ /°C in the X and Y direction and equal to 7*10⁻⁶/°C in the Z direction.The X direction is indicated in fig.2 as a black spot, representing an arrow tip pointing up from the sheet.

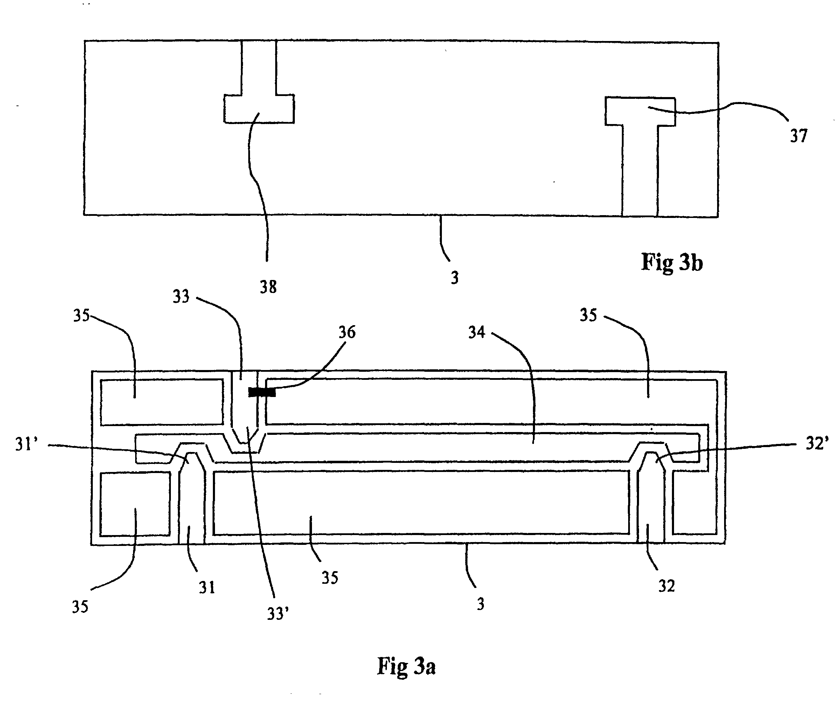

Still referring to fig.2, on one surface of the lithium niobate chip 2, which for convenience will be referred in the present invention as "top" surface of the chip 2, optical waveguides 21 are formed, by conventional techniques, such as titanium diffusion. Then, a few micron thick layer of a dielectric material, such as SiO₂ may be laid down (not shown), followed by a deposition of a coplanar structure of electrodes 22, 23, 24. Optical waveguides 21, buffer layer and electrode structure 22, 23, 24 can be structured in any manner convenient to the skilled in the art, according to the specific modulator to be realised. In the example sketched in fig.2, a Mach-Zehnder configuration for the optical waveguides 21 is shown, with a coplanar travelling-wave electrode structure comprising a RF electrode 22 having two end pads 22a, 22b, a DC or bias electrode 23 having one end pad 23a, as well as ground electrodes 24. Coming back to fig.1, the packaged modulator 1 further comprises a substrate 3, formed by an insulating material adapted for high frequencies applications, for example a ceramic thermoset polymer composite as TMM6™, which is a product of ROGERS (coefficient of thermal expansion 16*10⁻⁶/°C). In the example, the substrate 3 has the following dimensions: length 46.7 mm, width 9.2 mm, thickness 1.6 mm. Substrate 3 is shown in detail in fig.3a, 3b.

Both surfaces of the substrate 3 are covered by electrodeposited copper, for a thickness of 17 ± 1 µm. Then, on one surface of the substrate 3, which for convenience will be also referred in the present invention as "top" surface of the substrate 3, the electrodeposited copper is photo-etched to produce a contact pattern, matching with the electrode configuration of the top surface of the chip, and suitable electrical paths, adapted to carry the electrical signal or to be connected to a reference potential, as the ground. An example of said contact pattern is shown in fig.3a, comprising metalled pads 31, 32, 33 and grounded metalled areas 35 etched and then covered by a thin layer of Ni and Au. The thickness of the thin layer of Ni and Au can be chosen so as to determine a gap between chip and substrate. Width of metalled pads 31, 32, 33 is 1.4 mm; each metalled pad 31, 32, 33 has preferably a tapered end, reaching a width of 0.4 mm. Advantageously, a channel 34, free from metallizations, may be cut into the top surface of the substrate 3, said channel 34 being 1 mm wide and near 0.6 mm deep. A 50 ohm chip resistor 36 is soldered on the substrate 3, by a pre-solding operation with a lead/solder alloy, connecting the metalled pad 33 with the adjacent grounded metalled area 35. On the other surface of the substrate 3, which for convenience will be referred as "bottom" surface of the substrate 3, shown in fig. 3b, two areas 37, 38 may be left free from metallization, in a region corresponding to the metalled pads 32, 33. Said areas 37, 38 have dimensions 3.4 mm x 2 mm.

The function of the channel 34 on the top surface of the substrate 3, of the chip resistor 36, as well as of the areas 37, 38 on the bottom surface of the substrate 3, will become apparent from the following detailed description.

Coming back to fig.1, conventional coaxial connectors 4, 5, e.g., SMA connectors, are fixed to the substrate 3. Advantageously said connectors 4, 5 have fixing pins 4a, 4b, 4c, 5a, 5b, 5c to be soldered to substrate 3. In particular, pins 4a, 4c, 5a, 5c of both connectors 4, 5 are soldered to the metallized ground areas 35 (fig.3a); the pin 4b of connector 4 is soldered to the metallized pad 31; the pin 5b of connector 5 is soldered to the metalled pad 32. Other pins (not shown), projecting from the connectors 4, 5, may advantageously be soldered to the bottom surface of the substrate 3, in order to reach a complete fixing of the coaxial connectors 4, 5.

In connection with the fixing of the connectors 4, 5 to the substrate 3, the width of the substrate 3 is advantageously greater than the width of the chip 2, in order to have a compliant surface for such fixing.

Advantageously, conductive epoxy glue, such as Epotek™ 417, which is a product of Epoxy Technologies, is then laid down on the metalled pads 31, 32, 33 and on the metalled ground areas 35. In particular, the conductive glue is preferably laid down on the tapered regions 31', 32', 33' on the metalled pads 31, 32, 33 and in the region close the central channel 34 on the metalled ground areas 35.

Then, the top surface of the chip 2 is bonded in flip-chip mode onto the top surface of the substrate 3, in such a manner that the end pads 22a, 22b, 23a of the electrode configuration of the chip 2 match with respectively the metalled pads 32, 33, 31 of the substrate 3. Furthermore, the central region of the chip 2, containing the optical waveguides 21, the major part 22 of the RF electrode and the major part 23 of the bias electrode, matches with the central cut channel 34 (if present) on the substrate 3. The ground electrodes 24 on the chip 2 match with the metalled ground areas 35 on the substrate 3.

In this way, the electrical connections and the fixing mechanism for the assembly chip-substrate are advantageously the same. Alternatively, solders like lead/solder alloy can also be used for fixing, in addition to the conductive epoxy glue. The thickness of the conductive glue is less then 50 µm, in particular 25 µm and the chip is very close to the substrate.

The fixing step of the chip 2 on the substrate 3 is carried out in an environment temperature depending on the chosen conductive glue: in case of Epotek™ 417 this temperature is 60 °C.

Advantageously, the cut central channel 34 allows to alleviate the risk of mechanical damage of the optical waveguides during the fixing step, where there are no spacers between the chip and the substrate, in case the thickness of the metallizations on the substrate 3, together with the thickness of the conductive glue, shouldn't be enough to keep the chip 2 sufficiently away from the substrate 3. Advantageously a underfilter could be used to fill the space between the chip and the substrate. This underfiller has the effect to improve the adhesion between the chip and the substrate and to prevent the ingress of moisture. Said underfiller must have a fluidity degree sufficient to fill into the gap between the chip and the substrate. Moreover said underfiller is an electrical insulator.

Optical fibres 6,7 are then attached in any conventional manner to the chip 2, e.g. by means of conventional fibre blocks 8, 9 (fibre pigtailing). Alternatively, optical fibres 6, 7 can be attached to the chip 2 before said step of bonding the same chip 2 to the substrate 3.

In connection with fibre pigtailing, the length of the substrate 3 is preferably smaller than the length of the chip 2, in order to avoid any conflict with glues involved in the pigtailing step.

The assembly comprising chip 2, substrate 3, connectors 4, 5, fibres 6, 7 together with pigtailing fibre blocks 8, 9 is then preferably encapsulated with a silicon type resin 10.

A silicon type resin adapted to the purpose of the present invention is a thermoplastic resin named 145 RTV product of Silatec Corp.

This resin provides physical protection to the device, whilst at the same time it produces a flexible fibre feedthrough, eliminating the time consuming effort of threading a proper feedthrough over the fibre.

The encapsulated assembly is then advantageously fitted into a plastic case 11 made in two halves, respectively an upper half and a bottom half, which provides a final rigid protection for the chip 2, the substrate 3 and fibre pigtails. The case 11 is preferably made in a plastic material, but alternatively the case may be in a metallic material, aluminium or like. A suitable plastic material is VALOX® 420 product of Valox Inc..

The connectors 4, 5 are neatly fitted between the two halves of the plastic case 11 to provide the necessary electrical input.

As far as the encapsulation step, the assembly comprising chip 2, substrate 3, fibres 6, 7 together with pigtailing fibre blocks 8, 9 is preferably put onto the bottom half of the plastic case 11. Then, the whole assembly so formed is put in a mould, which is then filled with the silicon resin 10 in liquid state, to be then cured.

After the removing of the mould, the upper part of the plastic case 11 is added, in order to close and protect the whole device. Advantageously, the two halves of the plastic case 11 may be designed in such a way as to have locking joints to be closed together, without any use of screws or other fixing means.

The operating of modulator 1 is described as follows.

Referring to fig.1-2-3, a RF signal generator (not shown) is attached to the connector 5, in order to provide the modulation signal to the modulator 1. The RF signal is carried by the metallized pad 32 and transferred to the RF electrode pad 22a on the chip 2 by means of the conductive glue laid down on the tapered region 32' of said metalled pad 32. The RF signal travels along the RF electrode 22, passes through the electrode pad 22b and is then transferred to the metalled pad 33 by means of the conductive glue laid down on the tapered region 33' of said metalled pad 33. From there, the RF signal is transferred to the grounded metallization 35, through the resistor 36.

Analogously, a DC signal generator (not shown) is attached to the connector 4, in order to bias the modulator 1 to the exact operating point on its response curve. The DC signal is carried by the metalled pad 31 and transferred to the bias electrode 23, through the pad 23a, on the chip 2, by means of the conductive glue laid down on the tapered region 31' of said metalled pad 31.

The encapsulation of the device with the silicon resin 10 adequately protects the device 1, put in the plastic case 11, against accidental shocks. There is no risk of interaction between the dielectric material forming the encapsulation 11 and the electric fields involved within the active device 1, due to the above described flip-chip bonding method of the chip 2 on the substrate 3: the electrodes 22, 23 and the contact pads 31, 32, 33 are shielded and protected, since they are not in direct contact with the silicon resin, thanks to such bonding method. The non-metalled areas 37, 38 on the bottom surface of the substrate 3 (fig. 3b) have essentially the function of allowing free propagation through air of the electric fields.

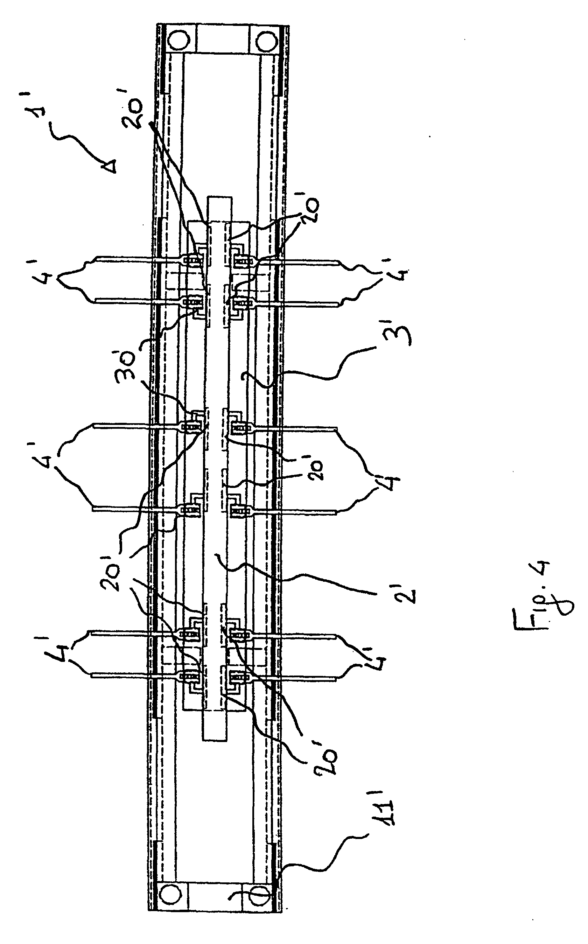

Referring now to fig.4, a further application of flip-chip packaging technique is shown. Such figure refers to a switch 1' comprising a chip 2' bonded in flip-chip mode to a substrate 3'. On the top surface of the chip 2' waveguides are formed (not shown) and electrodes 20' are deposited.

On the top surface of the substrate 3' electrical paths and pads 30' are formed, with the same method described for the modulator. The pattern has to be matched with the electrode structure on the top surface of the chip 2'. Coaxial connectors being not involved as in the case of the modulator, a series of conventional contact pins 4' can be soldered to the substrate 3', in correspondence of the metallized paths 30'.

Then, the bonding step of the chip 2' on the substrate 3' can be carried out, by depositing a conductive glue on the metalled pads on the substrate 3' and by facing the top surface of the chip 2' with the top surface of the substrate 3'. Fig.4 shows the assembly chip - substrate put in the lower half of a plastic case 11'. It is to be intended that optical fibres (not shown) are to be pigtailed to the ends of the chip 2', analogously to optical fibres 6, 7 of fig.1: such pigtailing step can be also carried out prior to the bonding of the chip 2' on the substrate 3'.

Encapsulation and closing of the plastic case 11' by an upper half of the case itself are then carried out, as already described for the modulator.

As a variant of the process described, the top surface of the chip 2, 2' may be advantageously passivated, to alleviate problems due to the non hermetic nature of the plastic case 11, 11'. Problems can arise, e.g., due to external contamination, for example by humidity.

Passivation step may be carried out before the bonding of the chip 2, 2' on the substrate 3, 3', covering the top surface of the chip with a layer of photosensitive material having a thickness of at least 4 µm, leaving unpassivated the area required for the electrodes and for the fixing of the chip 2, 2' to the substrate 3, 3'. A suitable photosensitive material is (benzaciclobutan) BCB.

Advantageously, the moulding step may be carried out in such a way as to leave some room between the encapsulating material and the walls of the plastic case 11, 11' in the region of fibre pigtailing.

Applicant has noticed that during the thermal cyclings some stresses arise in such region, with consequent risk of damaging the pigtailing, due to thermal expansion in the junction zone between the chip 2, 2' and the pigtailed fibre blocks. By leaving some room between the encapsulating material 10 and the walls of the plastic case 11, 11', the expansion can be left free to actuate with no stress arising.

Preferably, said room is created by insertion of crossed sliding elements in pass-through holes properly made in the walls of the bottom half of the mould, in correspondence of the fibre blocks.

Advantageously, some holes are made in the walls of the bottom half of the plastic case 11, 11' in such a way that the silicon resin should fill them during the curing step. Thus, some extrusion into the case are made in the encapsulation. Such extrusion are effective in holding the encapsulated device steady in the bottom half of the plastic case during the removal of the mould, after curing. By that, risks of damaging of the pigtailed junction is further reduced.

As far as the material forming the substrate 3, 3', it has to be an insulating material, in order to carry metallizations patterns as described. Further, it has to be well suited for microwave applications.

As said, for an X-cut lithium niobate chip, the coefficient of thermal expansion in the Y direction is 15.4*10⁻⁶ /°C.

Ideally, the material forming the substrate should have a coefficient of thermal expansion equal to the coefficient of thermal expansion of lithium niobate in the length direction, in order to reduce stress problems due to thermal expansion delta during the cooling of the assembly chip-substrate.

In experiments, carried out by the applicant prior to the invention in order to find a submount or package material with low cost, thermal cycling from -40 °C to +85 °C were applied to series of lithium niobate chips bonded on mild steel substrates. As a result, 10% of the lithium niobate chips suffered from cracks. Mild steel is a low cost material with respect to stainless steel, which is presently used in packaging technique of active devices (see for example Nagata et al., "Mechanical Reliability of LiNbO₃ Optical Modulators Hermetically Sealed in Stainless Steel Packages", Optical Fiber Technology, 1996), but has a coefficient of thermal expansion of near 13*10⁻⁶ /°C, that is, lower than the coefficient of thermal expansion of lithium niobate. It is to be noted that stainless steel has a coefficient of thermal expansion of near 17*10⁻⁶ /°C, that is, it has a mismatch similar, in absolute value, to that of mild steel, with respect to lithium niobate.

Experiments performed by the Applicant have nevertheless surprisingly shown that a lithium niobate chip behaves well when fixed on a substrate of a material having a coefficient of thermal expansion greater than that of lithium niobate in the length direction.

Applicant has observed that these results can be explained by the assumption that lithium niobate behaves in a different way when submitted to tension forces or to compression forces during cooling: in particular, it seems that a lithium niobate chip has a better compression resistance with respect to tensile resistance.

Thus, at a low temperature a substrate formed by a material having a coefficient of thermal expansion greater than that of the lithium niobate is to be preferred with respect of a material having a coefficient of thermal expansion lower than that of the lithium niobate. In particular, a preferred coefficient of thermal expansion of the substrate is between 15*10⁻⁶ /°C and 20*10⁻⁶ /°C.

In particular, stainless steel is considered as thermally matched to lithium niobate.

An adequate material for the substrate should of course be an electrical insulator, in order to be adapted to flip-chip bonding. An example of said material is a ceramic thermoset polymer composite. Another example is to use a substrate of the same material as the chip. In this case the substrate matches the thermal expansion coefficient of the chip in all the directions. Advantageously, a material with a lower quality grade could be used for the substrate, in particular in respect of optical characteristics such as transparency.

The present invention reaches several advantages.

Flip-chip packaging of the active device 1, 1' is advantageous since it eliminates almost entirely use of wire and/or ribbon bonding, since the electrical signals are directly carried out by electrical paths on the substrate 3, 3' and then transferred to the chip 2, 2' by means of the conductive glue or solder. The manufacturing process is then improved, since electrical paths and metallizations on the substrate can be prepared independently, once the electrode structure of the chip is planned, with methods and machines derived from electronics: further, the glue and the chip itself may be precisely fixed by pick and place bonding machines.

Further, flip-chip packaging of the active device 1,1' allows easy integration of additional electrical components, according to specific requirements, such as chip resistors, capacitors and drivers. Such components can be mounted on the substrate 3, 3' to provide additional functionality within the same overall package. Where more complex chips, es. 1x16 switches require many electrical connections, said connections may be made without need of electrodes at the edges of the chip, reducing the chip complexity.

A plastic case is advantageous since it is very simple and low cost to manufacture and, in the case of packaging of a switch, with contact pins soldered to the substrate 3', it has the further advantage that said pins have not to be mutually electrically shielded as with metal cases, since plastic case provides isolation. Advantageously, these contact pins allow the fixing of the optoelectronic switch on conventional electronic mainboards, in the same way of conventional electronic components.

Moreover, the curable resin on which the complete assembly of the device is encapsulated provides physical protection to the device, in particular to the optical fibers that carry the optical signal in the device. the resin permits to have a package without optical feedthroughs for the input/output optical fibers.

Further, the two halves of the plastic case may be advantageously closed together by means of locking joints, without any use of screws or other fixing means.

However, it is to be noted that plastic case is not the only possible embodiment for the flip-chip packaging technique of the active device 1, 1'. Other types of packages, as conventional metallic packages or the like, suitably modified for connector or pin feedthroughs and shield, are in any case usable for manufacturing active devices with the flip-chip technique: in the case of metallic case, there is no need of silicon encapsulation, being a metallic case more resistant to accidental shocks than a plastic case.

## Claims

1. Active optical device assembly (1) comprising
a substrate (3) having at least a planar surface on which a plurality of electrical contact pads (31,32,33) are formed,
a chip (2) having a surface on which at least one optical waveguide (21) and a plurality of electrodes (22,23,24) are formed,
said chip surface being in a facing relationship and in a direct mechanical connection with the planar surface of the substrate (3),
said electrical contact pads (31,32,33) being in electrical contact to said electrodes (22,23,24),
wherein said chip (2) is made of a thermally anisotropic crystalline material having first and second different magnitude coefficients of thermal expansion, the larger of the first and second coefficients of thermal expansion being in a direction along the longest dimension of said chip surface and wherein said substrate (3) has a third coefficient of thermal expansion, **characterised in that** said third coefficient of thermal expansion is both dissimilar from and greater than said larger of the first and second coefficients.

2. Active device assembly according to claim 1, in which said contact pads and said electrodes provide mechanical connection between said chip and said substrate.

3. Active device assembly according to claim 1, wherein said chip is a lithium niobate chip.

4. Active device assembly according to claim 1, in which said substrate is a lithium niobate substrate.

5. Active device assembly according to claim 1, in which said substrate is of a ceramic thermoset polymer composite.

6. Active device assembly according to claim 1, further comprising an underfiller disposed between said chip and said substrate.

7. Active device assembly according to claim 1, wherein said contact pads are in contact with said electrodes by a conductive glue.

8. Active device assembly according to claim 7, wherein said conductive glue is an epoxy glue.

9. Active device assembly according to claim 1 wherein said chip comprises an electro-optical modulator.

10. Active device assembly according to claim 1 wherein said chip comprises a switch.

11. Method of packaging and assembling an optical planar active device, comprising a chip (2) of a thermally anisotropic crystalline material having a surface on which there are formed at least one optical waveguide (21) and a plurality of electrodes (22,23,24) and having first and second different magnitude coefficients of thermal expansion, the larger of the first and second coefficients of thermal expansion being in a direction along the longest dimension of said chip surface,
said method comprising the following steps:
providing a substrate (3) having at least a planar surface on which a plurality of contact pads (31,32,33) are formed,
placing said chip surface in a facing relationship with the planar surface of the substrate,
connecting said contact pads to said electrodes to provide electrical connection and direct mechanical connection,
**characterised in that** said step of providing a substrate comprises selecting a substrate having a third coefficient of thermal expansion that is both dissimilar from and greater than said larger of the first and second coefficients of thermal expansion.

## Patentansprüche

1. Aktive optische Elementanordnung (1), mit:
einem Substrat (3) mit mindestens einer planaren Oberfläche, auf welcher eine Vielzahl elektrischer Kontaktbahnen (31, 32, 33) gebildet sind,
einem Chip (2) mit einer Oberfläche, auf welcher mindestens ein optischer Wellenleiter (21) und eine Vielzahl von Elektroden (22, 23, 24) gebildet sind,
wobei die Chipoberfläche in einer zueinander gegenüberliegenden Anordnung und in einer direkten mechanischen Verbindung mit der planaren Oberfläche des Substrats (3) ist,
wobei die elektrischen Kontaktbahnen (31, 32, 33) in elektrischem Kontakt mit den Elektroden (22, 23, 24) stehen,
wobei der Chip (2) aus einem thermisch anisotropen kristallinen Material hergestellt ist, welches erste und zweite Wärmeausdehnungskoeffizienten unterschiedlicher Größe aufweist,
wobei der größere der ersten und zweiten Wärmeausdehnungskoeffizienten in einer Richtung entlang der längsten Dimension der Chipoberfläche verläuft, und wobei das Substrat (3) einen dritten Wärmeausdehnungskoeffizienten aufweist, **dadurch gekennzeichnet, dass** der dritte Wärmeausdehnungskoeffizient verschieden von und größer als der größere der ersten und zweiten Koeffizienten ist.

2. Aktive optische Elementanordnung nach Anspruch 1, wobei die Kontaktbahnen und die Elektrode eine mechanische Verbindung zwischen dem Chip und dem Substrat bereitstellen.

3. Aktive optische Elementanordnung nach Anspruch 1, wobei der Chip ein Lithiumniobat-Chip ist.

4. Aktive optische Elementanordnung nach Anspruch 1, wobei das Substrat ein Lithiumniobat-Substrat ist.

5. Aktive optische Elementanordnung nach Anspruch 1, wobei das Substrat aus einem keramischen wärmehärtbaren Polymer-Verbundstoff ist.

6. Aktive optische Elementanordnung nach Anspruch 1, weiterhin umfassend eine zwischen dem Chip und dem Substrat befindliche Unterfüllung.

7. Aktive optische Elementanordnung nach Anspruch 1, bei der die Kontaktbahnen mit den Elektroden über einen leitfähigen Kleber in Kontakt stehen.

8. Aktive optische Elementanordnung nach Anspruch 7, bei der der leitfähige Kleber ein Epoxid-Kleber ist.

9. Aktive optische Elementanordnung nach Anspruch 1, bei der der Chip einen elektro-optischen Modulator aufweist.

10. Aktive optische Elementanordnung nach Anspruch 1, bei welcher der Chip einen Schalter aufweist.

11. Verfahren zum Verpacken und Zusammensetzen einer optischen planaren aktiven Einrichtung, mit einem Chip (2) aus einem thermisch anisotropen kristallinen Material, welches eine Oberfläche aufweist, auf der wenigstens ein optischer Wellenleiter (21) und eine Vielzahl von Elektroden (22, 23, 24) gebildet sind und welches thermische Expansionskoeffizient mit erster und zweiter unterschiedlicher Größe aufweist, wobei der größere der ersten und zweiten thermischen Expansionskoeffizienten in einer Richtung angeordnet ist, entlang der längsten Dimension der Chip-Oberfläche,
wobei das Verfahren folgende Schritte aufweist:
Bereitstellung eines Substrats (3), welches wenigstens eine planare Oberfläche aufweist, auf der eine Vielzahl von Kontaktbahnen (31, 32, 33) gebildet sind,
Platzieren der Chip-Oberfläche in einem der planaren Oberfläche des Substrats gegenüberliegendem Verhältnis,
Verbinden der Kontaktbahnen mit den Elektrode zur Bildung einer elektrischen Verbindung und zur direkten mechanischen Verbindung,
**dadurch gekennzeichnet, dass** der Schritt des Bereitstellen des Substrates das Auswählen eines Substrates beinhaltet, welches einen dritten thermischen Expansionskoeffizienten aufweist, der sowohl unterschiedlich ist als auch größer ist als der größere des ersten und zweiten thermischen Expansionskoeffizienten.

## Revendications

1. Assemblage d'un composant optique actif comprenant
un substrat (3) ayant au moins une surface plane sur laquelle sont formés une pluralité de plots de contact électrique (31, 32, 33),
une puce (2) ayant une surface sur laquelle sont formés au moins un guide d'onde optique (21) et une pluralité d'électrodes (22, 23, 24),
ladite surface de la puce étant située en face et en connexion mécanique directe avec la surface plane du substrat (3),
lesdits plots de contact électrique (31, 32, 33) étant en contact électrique avec lesdites électrodes (22, 23, 24),
dans lequel ladite puce (2) est faite d'un matériau cristallin thermiquement anisotrope ayant des premier et deuxième coefficients différents de grandeur de dilation thermique, le plus grand des premier et deuxième coefficients de dilatation thermique étant dirigé dans le sens de la plus longue dimension de ladite surface de la puce et dans lequel ledit substrat (3) a un troisième coefficient de dilatation thermique, **caractérisé en ce que** ledit troisième coefficient de dilation thermique est à la fois dissemblable et supérieur au dit plus grand des premier et deuxième coefficients.

2. Assemblage d'un composant actif selon la revendication 1, dans lequel lesdits plots de contact et lesdites électrodes fournissent une connexion mécanique entre ladite puce et ledit substrat.

3. Assemblage d'un composant actif selon la revendication 1, dans lequel ladite puce est une puce au niobate de lithium.

4. Assemblage d'un composant actif selon la revendication 1, dans lequel ledit substrat est un substrat au niobate de lithium.

5. Assemblage d'un composant actif selon la revendication 1, dans lequel ledit substrat est fait d'un composé polymère céramique thermofixé.

6. Assemblage d'un composant actif selon la revendication 1, comprenant en outre un matériau de remplissage disposé entre ladite puce et ledit substrat.

7. Assemblage d'un composant actif selon la revendication 1, dans lequel lesdits plots de contact sont en contact avec lesdites électrodes par le biais d'une colle conductrice.

8. Assemblage d'un composant actif selon la revendication 7, dans lequel ladite colle conductrice est une colle époxy.

9. Assemblage d'un composant actif selon la revendication 1, dans lequel ladite puce comprend un modulateur électro-optique.

10. Assemblage d'un composant actif selon la revendication 1, dans lequel ladite puce comprend un commutateur.

11. Méthode d'encapsulation et d'assemblage d'un composant actif optique plan, comprenant une puce (2) d'un matériau cristallin thermiquement anisotrope ayant une surface sur laquelle sont formés au moins un guide d'onde optique (21) et une pluralité d'électrodes (22, 23, 24) et un ayant des premier et deuxième coefficients différents de grandeur de dilation thermique, le plus grand des premier et deuxième coefficients de dilatation thermique étant dirigé dans le sens de la plus longue dimension de ladite surface de la puce,
ladite méthode comprenant les étapes suivantes consistant à :
proposer un substrat (3) ayant au moins une surface plane sur laquelle sont formés une pluralité de plots de contact (31, 32, 33),
placer ladite surface de la puce en une position faisant face à la surface plane du substrat,
connecter lesdits plots de contact aux dites électrodes afin de fournir une connexion électrique et une connexion mécanique directe.
**caractérisée en ce que** ladite étape consistant à fournir un substrat comprend la sélection d'un substrat ayant un troisième coefficient de dilatation thermique qui est à la fois dissemblable et supérieur au dit plus grand des premier et deuxième coefficients de dilatation thermique.
